# EUROPÄISCHE PATENTANMELDUNG

(11) **EP 1 845 481 A1**
(43) Veröffentlichungstag der Anmeldung: **17.10.2007**
(21) Anmeldenummer: 06007609.8
(22) Anmeldetag: 11.04.2006
(51) Int. Cl.: G06K 19/077

(54) **Mobiler Datenspeicher mit Bandfiltercharakteristik**

(71) Anmelder: SIEMENS AKTIENGESELLSCHAFT, 80333 München (DE)
(72) Erfinder: Knorr, Johannes, Dr., 1220 Wien (AT); Kubena, Robert, 1080 Wien (AT)

(57) **Zusammenfassung**

Die Erfindung betrifft einen mobilen Datenspeicher (1) für RFID-Anwendung oder eine mobile Sensoreinheit mit einer integrierten Schaltung (2) und einer Antenne (3). Diese sind erfindungsgemäß mit einem ersten und einen zweiten Schwingkreis versehen, die beide mittels eines Koppelelements (C_{K}) miteinander gekoppelt sind. Der erste Schwingkreis weist die integrierte Schaltung (2) und der zweite Schwingkreis die Antenne (3) auf.

## Beschreibung

Die Erfindung bezieht sich auf einen mobilen Datenspeicher für RFID(**R**adio **F**requency **I**dentification)-Anwendung oder mobile Sensoreinheit mit einer integrierten Schaltung und einer Antenne.

Derartige mobile Datenspeicher sind allgemein bekannt. Sie werden nicht nur bei bestimmten Übertragungsfrequenzen angewandt, sondern sollen auch für den Einsatz in einem Bandbereich, z.B. dem USA-Band (902-928 MHz) geeignet sein. Zudem ist es nicht zu vermeiden, dass die Bauelemente mit gewissen Toleranzen behaftet sind. So kann z.B. die Chip-Eingangsimpedanz und die Substrat-Dielektrizitätskonstante bei Streifenleierantennen mehr oder weniger variieren. Um hieraus resultierende Auswirkungen dennoch zu vermeiden, wurden bisher breitbandige Antennenkonstruktionen gewählt, z.B. durch größere Substratdicke oder spezielle, größere Antennenformen. Weiterhin gibt es teurere Substrate, mit denen eine engere Toleranz der Dielektrizitätskonstante erreicht werden kann.

Der Erfindung liegt die Aufgabe zugrunde, einen mobilen Datenspeicher der oben genannten Art dahingehend zu verbessern, dass eine Bandfiltercharakteristik erreicht wird.

Die Aufgabe wird gelöst durch einen ersten und zweiten Schwingkreis, die beide mittels eines Koppelelements miteinander gekoppelt sind, wobei der erste Schwingkreis den Chip und der zweite Schwingkreis die Antenne aufweist.

Vorteilhafte Weiterbildungen der Erfindung sind den Unteransprüchen zu entnehmen.

Gemäß Anspruch 3 ist es besonders vorteilhaft, wenn die Antenne als Streifenleiterantenne ausgeführt ist.

Ein Ausführungsbeispiel der Erfindung wird im Folgenden anhand einer Zeichnung näher erläutert. Es zeigen:
- FIG 1: einen erfindungsgemäßen mobilen Datenspeicher für RFID-Anwendung,
- FIG 2: ein elektrisches Ersatzschaltbild des mobilen Datenspeichers gemäß FIG 1 und
- FIG 3: den für eine Bandfilterstruktur gemäß der Erfindung charakteristischen Frequenzgang.

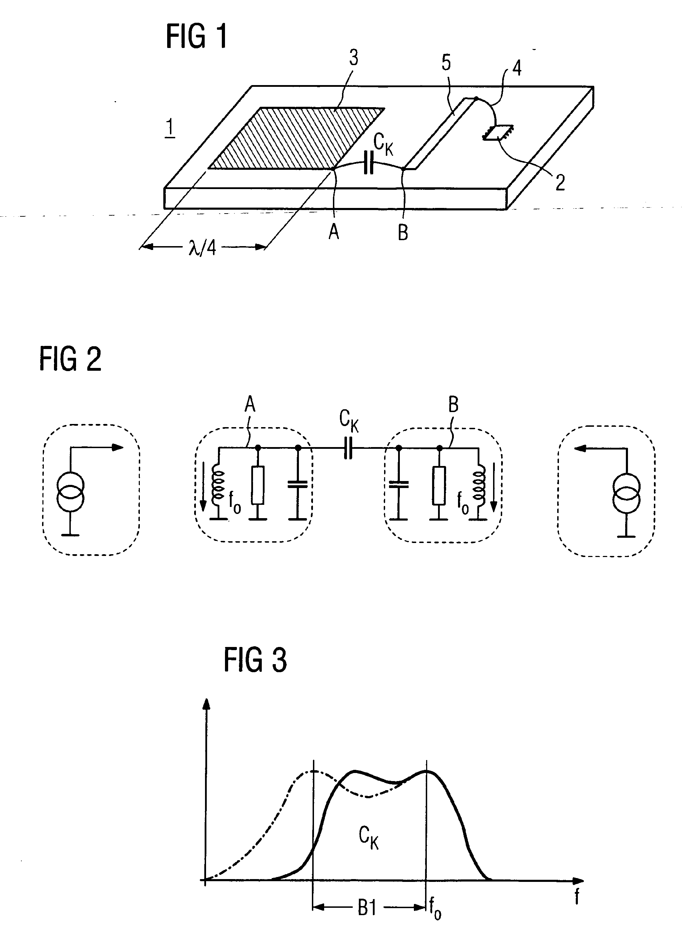

In FIG 1 ist ein mobiler Datenspeicher 1 für RFID(**R**adio **F**requency **I**dentification)-Anwendung dargestellt, auch Transponder oder Tag genannt, der in bekannter Weise eine integrierte Schaltung 2 (z.B. ein Chip) und eine Antenne 3 aufweist. Erfindungsgemäß ist die Antenne 3 durch eine Bandfilterstruktur derart angepasst, dass ein Frequenzgang gemäß FIG 3 erreicht wird.

Die Bandfilterstruktur wird durch zwei Schwingkreise erzeugt, die als Parallel- oder Serienschwingkreise ausgeführt sein können und die durch ein kapazitives oder induktives Koppelelement miteinander gekoppelt sein können. Als induktives Koppelelement kann beispielsweise ein Transformator dienen.

Im Ausführungsbeispiel gemäß FIG 1 ist der mobile Datenspeicher 1 mit zwei durch eine Koppelkapazität C_{K} als Koppelelement gekoppelten Parallelschwingkreisen ausgeführt. Dabei umfasst der erste Parallelschwingkreis eine λ/4-Streifenleiterantenne 3, die eine Durchkontaktierung auf Masse aufweist. Der zweite Parallelschwingkreis ist im Wesentlichen durch eine Reihenschaltung aus der integrierten Schaltung 2, einer Induktivität 4 und einer λ/4-Leitung 5 (z.B. einem λ/4-Transformator) gebildet. Dabei hat die λ/4-Leitung 5 die Eigenschaft einen Serienschwingkreis in einen Parallel-Schwingkreis überzuführen und umgekehrt. Im vorliegenden Ausführungsbeispiel wird der aus der integrierten Schaltung 2, die sowohl eine ohmsche als auch eine kapazitive Last darstellt, und der Induktivität 4 gebildete Serienschwingkreis in einen Parallelschwingkreis übergeführt.

So ergibt sich eine Bandfilterstruktur, deren Ersatzschaltbild in FIG 2 dargestellt ist, wobei als Koppelelement anstelle der Kapazität C_{K} auch ein magnetisches Koppelelement, z.B. ein Übertrager oder eine einfache Spule angewandt werden kann.

Je nach Einspeisemethode stellt die Antenne 3 einen Serien- oder Parallelschwingkreis dar. In der einfachsten Form der Einspeisung, wie im vorliegenden Ausführungsbeispiel über eine Mikrostreifenleitung oder auch bei koaxialer Einspeisung, ist es ein Parallelschwingkreis.

Die Bandfilterstruktur bietet gemäß FIG 1 und 2 einen ersten Einspeisepunkt A und einen zweiten Einspeisepunkt B.

In FIG 2 ist links der erste Parallelschwingkreis mit der Antenne 3 zum "Empfang" und rechts der zweite Parallelschwingkreis mit der integrierten Schaltung 2 zum "Senden" dargestellt. Beim Empfang liegt dabei am ersten Parallelschwingkreis eine Empfangsspannung U_{A} und beim Senden am zweiten Parallelschwingkreis eine Sendespannung U_{B} an.

In FIG 3 ist der für eine erfindungsgemäße Bandfilterstruktur des mobilen Datenspeichers 1 charakteristische Frequenzgang dargestellt. Abhängig von der Stärke der Kopplung beider Schwingkreise durch das Koppelelement, d.h. durch die Koppelkapazität C_{K} ergeben sich mehr oder weniger aneinander liegende Resonanzstellen, d.h. eine dementsprechende Bandbreite B1. Eine der Resonanzstellen trägt hier das Bezugszeichen fₒ.

Der erfindungsgemäße mobile Datenspeicher 1 ermöglicht den Einsatz bei höheren Bandbreiten, z.B. im Falle des USA-Bandes (902-928 MHz). Außerdem ist es möglich, durch die größere Gesamtbandbreite Bauelementtoleranzen (z.B. bezüglich Chip-Eingangsimpedanz und Substrat-Dielektrizitätskonstante) abzufangen. Anstelle des immobilen Datenspeichers kann auch eine mobile Sensoreinheit erfindungsgemäß ausgeführt sein.

## Patentansprüche

1. Mobiler Datenspeicher (1) für RFID-Anwendung oder mobile Sensoreinheit mit einer integrierten Schaltung (2) und einer Antenne (3), **gekennzeichnet durch** einen ersten und einen zweiten Schwingkreis, die beide mittels eines Koppelelements (C_{K}) miteinander gekoppelt sind, wobei der erste Schwingkreis die integrierte Schaltung (2) und der zweite Schwingkreis die Antenne (3) aufweist.

2. Mobiler Datenspeicher nach Anspruch 1, **dadurch gekennzeichnet, dass** die beiden Schwingkreise als Parallelschwingkreise ausgeführt sind.

3. Mobiler Datenspeicher nach Anspruch 1 oder 2, **dadurch gekennzeichnet, dass** die Antenne als Streifenleiterantenne (3) ausgeführt ist.

4. Mobiler Datenspeicher nach einem der vorangehenden Ansprüche, **dadurch gekennzeichnet, dass** im ersten Schwingkreis eine Induktivität (4) zur integrierten Schaltung (2) in Reihe geschaltet ist.

5. Mobiler Datenspeicher, **dadurch gekennzeichnet, dass** das Koppelelement (C_{K}) kapazitiv ausgeführt ist.

6. Mobiler Datenspeicher nach einem der vorangehenden Ansprüche, **dadurch gekennzeichnet, dass** der erste Schwingkreis in Reihe zu der Serienschaltung aus Induktivität (4) und integrierter Schaltung (2) eine λ/4-Leitung (5) aufweist.
